# EUROPEAN PATENT SPECIFICATION

(11) **EP 1 153 228 B1**
(45) Date of publication and mention of the grant of the patent: **06.08.2003**
(21) Application number: 00901782.3
(22) Date of filing: 04.02.2000
(51) Int. Cl.: F16F 9/06, F16F 9/58

(54) **SPRING AND DAMPER UNIT**
FEDER-DÄMPFER-EINHEIT
UNITES A RESSORT ET D'AMORTISSEMENT

(30) Priority: 12.02.1999 GB 9903246; 12.02.1999 GB 9903248
(43) Date of publication of application: 14.11.2001
(73) Proprietor: ATB Sales Limited, St. Leonards on Sea, East Sussex TN37 7PZ (GB)
(72) Inventor: CULLIMORE, David, Edward, Cheltenham, Gloucestershire GL51 8DX (GB); WARD, Adrian Roger, Witney, Oxon OX8 5FJ (GB); WHYTE, Jon Frank Ross, Winchcombe, Gloucestershire GL54 5BT (GB)
(74) Representative: Wise, Stephen James
(86) International application number: GB0000327
(87) International publication number: WO00047912

(56) References cited:
- WO-A-99/03726
- DE-A- 3 043 435
- DE-A- 19 729 287

## Description

The present invention relates to a spring and damper unit.

Spring and damper units of coaxial mode of construction conventionally consist of a coil spring effective in compression and surrounding a double-acting hydraulic, pneumatic or gas telescopic damper. The damper normally has a rod carrying a piston which slides in a cylinder filled with fluid and the movement of which within the cylinder is resisted by throttled flow of the fluid through an opening or openings in the piston during passage from one side of the piston to the other. The damped movement of the piston is superimposed, in the mounted state of the unit, on the spring travel. The opening or openings in the piston can be influenced to provide different degrees of throttling between the compression phase and the rebound phase of the damper and also variable throttling in dependence on the rate of compression and/or rate of rebound. Such a unit is relatively bulky and heavy and allows limited, if any, access to the damper for adjustment purposes.

Also known are units consisting of a rubber spring combined with a diaphragm-actuated damper in which fluid is displaced through flow-throttling openings in a dividing wall. These units are again bulky and heavy, since the mass of rubber provides a volume and weight penalty similar to a coil spring.

Some spring and damper units utilise gaseous and hydraulic media, with the gaseous medium, for example air, nitrogen or freon, separated from the hydraulic medium by a separator piston. Damping is performed, as in a conventional telescopic damper, by a damping piston carried by a rod and moving in cylinder filled with hydraulic fluid which is displaced through openings in the piston. The gaseous medium is compressible under movement of the separator piston and functions as a spring as well as an anti-cavitation measure in the case of higher rates of movement of the damping piston. Such a unit, in which cylinder chambers for the hydraulic medium and a chamber for the gaseous medium are in series, is long in relation to available stroke and has a large rising spring rate. A related spring and damper unit of that kind is represented by the spring suspension system disclosed in International Patent Application WO 99/03726; this system includes two telescopic housings, one of which is formed by a tubular piston rod carrying a piston sliding in the other housing to cause compression of gas in an adjoining gas spring chamber. Quite distinct from the air spring, the system includes a sealed damper with two damping fluid chambers between which damping fluid is displaceable via a valved separator piston carried by the piston rod. The gas spring and fluid damping are thus controlled by two separate pistons, resulting in a particularly lengthy system with limited utility beyond the specifically disclosed bicycle front forks suspension.

It is accordingly the object of the invention to provide a spring and damper unit which can be of relatively light and compact construction and can provide effective springing and damping respectively by a gaseous medium, such as air, and a damping fluid, such as hydraulic oil. A further object is the provision of a unit in which the spring exercises the additional function of actuation of the damper in the compression phase, so as to save components and consequently weight. Yet another object is the provision of a unit with a more linear rising rate of the spring and thus a more progressive spring characteristic of the unit. A further object is the provision of a unit capable of a higher level of damping in the rebound phase by comparison with the compression phase and exhibiting reduced susceptibility to cavitation of the damping fluid in the case of higher stroke rates. Other objects and advantages of the invention will be apparent from the following description.

According to a first aspect of the present invention there is provided a spring and damper unit comprising two telescopically movable housings containing a spring chamber for a gaseous medium which is compressible on movement of the housings together in a compression stroke thereof and a damping chamber for a damping fluid which is displaceable therefrom during the compression stroke, characterised in that the housings additionally contain a piston movable by such compressed gaseous medium to reduce the volume of the damping chamber thereby to cause said displacement.

In this unit, actuation of the piston responsible for displacing damping fluid for damping purposes is undertaken by the spring, in particular by the air or gas undergoing compression in the spring chamber during the compression stroke of the housings. The spring thus exerts a dual function and an exclusively mechanical actuation of the piston, such as by a rigidly attached piston rod as in a conventional telescopic damper, is not required.

Preferably, the piston is arranged to produce an increase in the volume of the spring chamber concurrently with the reduction in the volume of the damping chamber, the increase in the spring chamber volume being less than a reduction in that volume produced by the movement of the housings together. Thus, an interchange between the volume of the spring chamber and the volume of the damping chamber takes place during operation of the unit, in particular the decrease in the volume of the damping chamber to bring about the damping action is accompanied by an increase in the available volume of the spring chamber to partially offset the decrease produced by movement of the housings together. For a given set of parameters the total reduction in the spring chamber volume is consequently not as great as in a conventional air or gas spring and a more linear rising spring rate is obtained.

In a particularly favourable constructional configuration the spring chamber is formed by part of a cavity in one of the housings and part of a cavity in the other housing and the damping chamber is formed by another part of the latter cavity. In that case, the piston is preferably disposed in the latter cavity and sealing means can be present to provide a seal between the piston and a surrounding circumferential wall. The piston is preferably arranged to separate the spring chamber from the damping chamber. Such a construction allows the housing to be of simple form, for example telescopically interengaging tubes with a piston located exclusively in one of he housings and serving, by itself, to separate the two fluid media. The piston is preferably floating and thus mechanically unrestrained, the sole restraint to movement being provided by the static and dynamic fluid forces prevailing in the chambers and by any friction generated by the sealing means.

For preference, however, the unit also comprises drive means effective on movement of the housings together at a rate exceeding a predetermined rate to mechanically positively drive the piston. In practice, a high speed of movement of the housings in a compression stroke may exceed the speed of damped movement of the piston, thus producing a lag in piston travel. To overcome this, mechanically positive driving of the piston can come into effect to take over from or assist the fluid drive by the compressed gaseous medium. Such an auxiliary drive can be conveniently realised by a drive member drivingly engaging the piston after overcoming a spacing therefrom. If the rate of compression of the gaseous medium sufficiently exceeds the rate of movement of the piston, the spacing is overcome and the drive member, effectively a fixed abutment, acts to mechanically drive the piston. The predetermined rate beyond which the drive means takes over or supplements the driving may be variable inter alia by variation of the spacing.

The unit may also include cushioning means for cushioning at least one of an end stage of movement of the housings together in the compression stroke and an end stage of movement of the housings apart in a rebound stroke. Thus, the housings can be progressively braked to a stop in either or both senses of their relative movement.

Preferably, the housings bound an interior space formed by a cavity in one of the housings and a cavity in the other housing, and the piston is a floating piston disposed in one of the cavities and dividing the interior space into the spring chamber and the damping chamber, the spring chamber and the damping chamber containing, respectively, a gaseous medium and a damping fluid, and the housings being movable together in a compression stroke thereof to compress the gaseous medium through reduction in the volume of the spring chamber and to cause, by compression of the gaseous medium, movement of the piston to produce a reduction in the volume of the damping chamber for displacement of damping fluid therefrom.

Such a unit, based on the functional principles of the first aspect of the invention, provides a particularly simple constructional realisation of the invention through use of housings jointly bounding an interior space formed by two housing cavities, the piston serving to divide the interior space appropriately into the spring chamber and the damping chamber respectively filled with the gaseous medium and the damping fluid. In that case, the spring chamber is preferably formed by a part of the other cavity and part of the cavity with the piston, and the damping chamber is formed by another part of the latter cavity.

Similarly, to eliminate out-of-phase travel of the piston in more extreme cases of compression of the unit, the housing with the other cavity can be provided with a drive member which is disposed at a spacing from the piston in an unloaded state of the unit and arranged to drivingly engage the piston on movement of the housings together at a rate exceeding a predetermined rate. The drive member thus represents an abutment fixed relative to that housing and can conveniently be in the form of a rod extending along a common axis of the cavities and the piston. To ensure the rod does not, due to its cross-sectional area and the limited space within the housings, hinder normal driving action compressed gaseous medium on the piston, the rod can be provided with a duct for conducting the gaseous medium to and from the region of the piston.

For preference, resilient means are present to cushion an end stage of the movement of the housings together and/or an end stage of the movement apart. The resilient means for cushioning movement apart can be conveniently provided by an elastomeric element mounted on the rod and co-operable with an abutment at the housing with the cavity containing the piston. Location of the resilient means in this position, as distinct from at an end of the unit, enhances the compact construction of the unit.

Preferably, the housing with the cavity containing the piston additionally has a piston portion movable in the other cavity during the compression stroke to produce the reduction in the volume of the spring chamber. Such a piston portion, for example a partially closed head of the respective housing, can provide an effective reduction in the volume of the spring chamber without the need for a separate piston for that purpose.

According to a second aspect of the present invention there is provided a spring and damper unit comprising two telescopically movable housings containing a spring chamber for a gaseous medium which is compressible on movement of the housings together in a compression stroke thereof, a first damping chamber for a damping fluid which is displaceable therefrom by a piston during the compression stroke and a second damping chamber for receiving the displaced fluid and returning the fluid to the first damping chamber on movement of the housings apart in a rebound stroke thereof, characterised in that the piston is arranged to separate the spring chamber from the first damping chamber and is movable to reduce the volume of the first damping chamber for said displacement of fluid therefrom and the second damping chamber is so arranged between the housings that movement of the housings apart causes a reduction in the volume of the second damping chamber for expulsion of fluid to be returned to the first damping chamber.

In such a unit, in which air or gas springing is produced by relative movement of the housings and damping, in a compression phase, by the piston separating the spring chamber from the first damping chamber and causing fluid displacement from the latter chamber, the damping fluid thus displaced in that phase is subsequently subjected to a positive pressure by the housings in the rebound phase. The return flow of the damping fluid can thus be throttled to provide a high level of rebound damping with reduced or no risk of cavitation. The location of the second damping chamber between the two housings allows this chamber to have a concentric relationship to the first damping chamber, which contributes to the compact nature of the unit and significantly improves the achievable ratio of unit length to available stroke.

Preferably, the first and second damping chambers have substantially the same area in cross-section transversely to the directions of movement of the housings in the compression and rebound strokes. This cross-sectional relationship of the two damping chambers results in substantially equal fluid displacements from the two chambers, so that the piston can maintain a substantially constant position relative to, for example, an adjacent end of the second damping chamber and thus arrive in one of its end positions when the housings are fully moved together. This favours attainment of a high stroke length relative to unit length.

In an advantageous constructional configuration the second chamber is formed by part of a cavity in one of the housings and the spring chamber, at least partially, by another part of the same cavity. Preferably, the spring chamber is additionally formed by part of a cavity in the other housing, a further part of which forms the first damping chamber. The first-mentioned cavity thus provides for a volume interchange between the spring chamber and second damping chamber during operation of the unit and a similar interchange, producible by the piston, can take place between the spring chamber and the first damping chamber.

The second damping chamber, which is preferably annular, can be radially bounded by two substantially concentric circumferential wall portions respectively of the two housings and axially bounded by two oppositely directed projections each provided at a respective one of the wall portions. Each such projection for preference consists of or includes sealing means providing a seal relative to the respective other wall portion. If the damping fluid is a liquid, such as hydraulic oil, the sealing means in such an arrangement can be subject to lubrication by the liquid in the second damping chamber during movement of the housings apart, which reduces friction and extends the service life of the sealing means.

Preferably, the housings each have a cavity enclosed by a respective one of two substantially coaxial and radially spaced circumferential walls and the piston is disposed in the cavity enclosed by an inner one of the walls, the walls each being provided with a respective one of two oppositely directed projections which together with substantially concentric portions of the walls bound the second damping chamber and which are movable towards one another on movement of the housings apart in the rebound stroke thereof to cause said reduction in the volume of the second damping chamber.

Such a unit, based on the functional principles of the second aspect of the invention, provides a particularly simple constructional realisation of the invention by way of two housing circumferential walls which have concentric portions and oppositely directed projections together bounding the second damping chamber. The spring chamber can then be conveniently formed by part of the cavity enclosed by the outer wall and part of the cavity enclosed by the inner wall, whilst the first damping chamber can be formed by a further part of the latter cavity. Each projection can comprise a seal sealingly contacting the respective other wall, each seal preferably being axially located in a groove.

The inner wall can be provided with duct means for conveying hydraulic fluid between the damping chambers, in which case that wall can advantageously comprise two substantially concentric and radially spaced tubes, with the duct means being formed in part by the space between the tubes. The tubes themselves can be connected at one pair of associated ends thereof with a closure member and at the other pair of associated ends thereof with an annular piston member defining the respective one of the projections at its outer circumference, the annular piston member being effective to simultaneously and reciprocally vary the volumes of the spring chamber and the second damping chamber during movement of the housings together and apart. The use of tubes results in a modular construction whereby the unit length and thus the stroke length may be able to be relatively easily modified between production runs. Constructional simplicity is enhanced if the outer one of the tubes is threadedly connected with and the inner one of the tubes clamped between the closure member and the annular piston member. A secure and stable assembly can then be achieved simply by tightening the closure member relative to the annular piston.

In an extension of the modular format, the outer wall can comprise a further tube which is partly concentric with and radially outwardly spaced from the outer tube of the inner one of the walls and which is provided at one end with the respective one of the projections. This further tube can similarly be threadedly connected at its other end with an own closure member. The unit is thus capable of being easily assembled from threadedly-interengaged components with interposition of appropriate seals to ensure leakproof connections.

An embodiment of the present invention will now be more particularly described by way of example with reference to the accompanying drawings, in which:
- Fig. 1: is a schematic axial section of a spring and damper unit embodying the invention and shown in a state between a full compression setting and a full rebound setting;
- Fig. 2: is a view similar to Fig. 1, but showing the full compression setting; and
- Fig. 3: is a view similar to Fig. 1, but showing the full rebound setting.

Referring now to the drawings, there is shown a coaxial pneumatic spring and hydraulic damper unit 10 comprising an outer housing 11 and an inner housing 12, the two housings being telescopically interengaged for movement together to execute a compression stroke and movement apart to execute a rebound stroke. In an installed state, the spring behaviour of the unit is effective primarily in the compression stroke to soften shock forces transmitted between two components, for example a vehicle wheel and vehicle body, intercoupled by the unit and the damping behaviour primarily in the rebound stroke to damp oscillations arising from spring restoration. Damping behaviour is also present in the compression stroke, but generally to a lesser degree.

The outer housing 11 comprises an end closure member 13, which incorporates an attachment eye 14, and a tube 15 threadedly connected to the closure member 13 so as to define a cylindrical cavity or bore 16 closed at one end by the member 13 and open at the other end. The inner housing 12 comprises a similar end closure member 17, which also incorporates an attachment eye 18, an inner tube 19 and outer tube 20, which are concentric with and radially spaced from each other and also concentric with and radially spaced from the tube 15 of the outer housing 11, and an annular piston member 21. The outer tube 20 is threadedly connected to both the closure member 17 and piston member 21 and the inner tube 19 is clamped between these two members by the process of tightening the members towards each other, a resilient sealing ring 22 being disposed between the inner tube 19 and piston member 21. The inner tube 19 defines a cylindrical cavity or bore 23 which is closed at one end by the closure member 17 and open at the other end via the opening in the piston member 21, the diameter of this opening being reduced relative to the bore diameter by an inwardly protruding lip of the piston member.

Slidably arranged in the bore 23 of the inner tube 19 of the inner housing 12 is a piston 24 provided with an annular seal 25 sealingly bearing against the inner wall surface of the tube 19. The piston 24 inclusive of seal 25 separates an inner damping chamber 26, on the right, filled with hydraulic oil from a spring chamber 27, on the left, filled with air under pressure. Since the bore 23 of the inner housing 12 communicates with the bore 16 of the outer housing 11 via the opening in the piston member 21, the spring chamber 27 is formed by parts of both bores. The inner damping chamber 26 is formed solely by part of the bore 23. The respective volumes of the two chambers 26 and 27 vary in dependence on the position of the piston 24.

The tube 15 of the outer housing 11 is provided at its free end with a radially inwardly directed projection in the form of two axially spaced beads or flanges 28 bounding a groove which receives an annular seal 29 in sealing contact with the outer wall surface of the outer tube 20 of the inner housing 12. An annular wiper seal 30 is present at the termination of the tube 15 to prevent ingress of foreign matter. The annular piston member 21 is analogously provided at its outer circumference with a radially outwardly directed projection in the form of two axially spaced beads or flanges 31 bounding a groove which receives a seal 32 in sealing contact with the inner wall surface of the tube 15 of the outer housing 11. The two projections and variable lengths of the concentric wall surfaces, which are disposed therebetween, of the tubes 15 and 20 bound an outer damping chamber 33 similarly filled with the hydraulic oil. The projection at the annular piston member 21 separates this chamber from the spring chamber 27. The outer damping chamber 33 is thus formed from a further part of the bore 23. The diameters of the bores 16 and 23 are so selected that the inner and outer damping chambers 26 and 33 have at least substantially the same area in cross-section.

The annular seals 25, 29 and 32 preferably each consist of a compound body composed of two axially spaced polytetrafluoroethylene rings and intermediate rubber flange of a radially outer rubber seat for the rings. Each seal is at some stage in execution of the compression and rebound strokes caused to wipe a surface with residual hydraulic oil and thus is subject to oil lubrication.

The closure member 13 of the outer housing 11 has an inlet (not shown) and a non-return valve 34 for feed of pressurised air into the spring chamber 27. The closure member 17 of the inner housing 12 correspondingly has inlets 35 (only one shown) usable for feed of hydraulic oil into the damping chambers 26 and 33. The damping chambers are interconnected in terms of flow by a duct system formed by a space 36 left between the inner and outer tubes 19 and 20 of the inner housing 12, an opening 37 provided in the tube 20 and connecting the space 36 with the outer damping chamber 33, and two channels 38 (only one shown) provided in the closure member 17 and connecting the space 36 with the inner damping chamber 26. Removably mounted in the inlets 35 are adjustable flow control valves 39 (only one shown) each with a valve member 40 controlling flow through the respective channel 38 between the damping chambers 23 to 33.

The unit 10 incorporates an auxiliary drive for the piston 24, the drive being in the form of a drive rod 41 which extends along a common axis of the bores 16 and 23 and piston 24 and which is threadedly secured at one end in the closure member 13 of the outer housing 11 and provided at the other end with a radially enlarged head. In the unloaded state of the unit, the head is normally disposed at a spacing 's' from the piston 21. The rod 41 has drillings 42 for feed of air to and from the region of the piston, which is mechanically separate from the rod 41 and other components of the unit. The piston thus floats in the bore 23, subject only to constraints on movement provided by friction and fluid loadings.

Finally, to cushion the end stages of movement of the housings 11 and 12 together in the compression phase and apart in the rebound phase the unit includes appropriate resilient cushioning elements. The cushioning element associated with the compression phase comprises an annular rubber body 43 seated in an internal recess in the closure member 13 of the outer housing 11 and co-operable with the piston member 21 of the inner housing 12, the body 43 and member 31 having mutually facing abutment surfaces of generally complementary shape. The cushioning element associated with the rebound phase comprises a compressible eiastomer cylinder 44 located between two end washers and slidably mounted on the drive rod 41 between the head thereof and a stop collar 45, for example a spring ring, secured on the rod at a spacing from the head. The elastomer cylinder 44 is co-operable, via the lefthand washer, with the inwardly protruding lip of the piston member 21 and can, under compression by the lip, deform by sliding movement of its constituent material along the rod.

In use of the unit 10, with the chambers 26, 27 and 33 appropriately filled with air under pressure and hydraulic oil the two attachment eyes 14 and 18 of the housings 11 and 12 are respectively coupled to two components intended to be relatively movable by way of a damped spring coupling. The unit can, for example, be incorporated in a two-wheel vehicle between a wheel axle and a frame or chassis. Normally, two or more units would be associated with an individual axle.

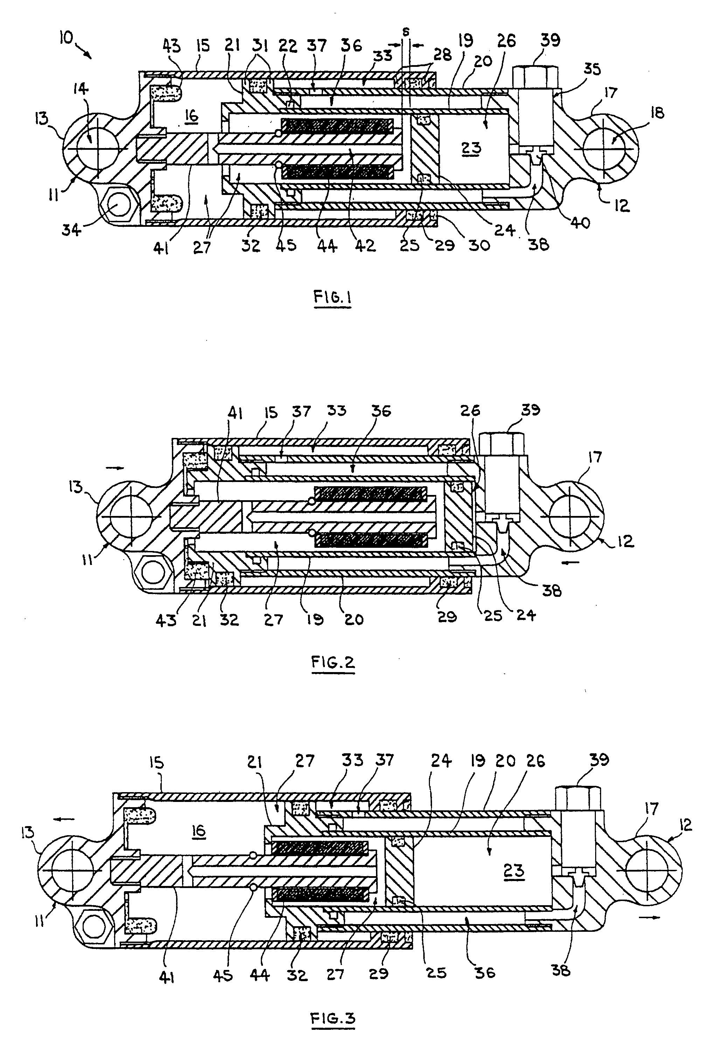

In the case of a compression stroke of the housings 11 and 12, thus telescopic movement of the housings together (whether starting from a fully expanded setting as in Fig. 3 or an intermediate position such as in Fig. 1 if the weight of a supported one of the two coupled components induces partial compression of the unit 10 in the normal state), the piston member 21 moves in the bore 16 towards the closure member 13 and reduces the volume of the spring chamber 27, which causes progressive compression of the already pressurised air in the chamber. The compressing air acts on the piston 24 to move it in the bore 23 in opposite sense to the movement of the piston member 31, i.e. towards the other closure member 17, and thus causes the piston 24 to reduce the volume of the inner damping chamber 26. The movement of the piston member 21 along the bore 16 has the simultaneous effect of increasing the volume of the outer damping chamber 33. The reduction in volume of the inner damping chamber 26 and increase in volume of the outer damping chamber 33 constrains a displacement of hydraulic oil from the former to the latter via the duct system formed by the channels 38, space 36 and opening 37. Preferably, one of the channels 38 is assigned to the flow in direction from the chamber 26 to the chamber 33 and the other chamber to the flow in reverse direction. The associated valves 39 are then effective in opposite sense to block flow in one direction and allow throttled flow in the other direction. The degree of throttling of the permitted flow determines the degree of damping, which is preferably relatively light in the compression phase of the unit. In this phase, the unit thus allows movement of the two coupled components towards one another against the resistance presented by the compressing air functioning as a pneumatic spring and damps that movement to a selected degree by the throttled displacement of the hydraulic oil.

Due to the equality or approximate equality of the cross-sectional areas of the two damping chambers 26 and 33 the fluid displacement of the chambers is the same or substantially the same during operation of the unit and the piston 24 consequently remains in the same position relative to the outer housing 11 in both the compression phase and the rebound phase, as is evident from comparison of Figs. 1, 2 and 3. This position of the piston 24 is selected to be close to the free end of the tube 15 of the outer housing 11, so that in the fully compressed state of the unit as shown in Fig. 2 both the piston and the free end of the tube 15 are closely adjacent to the closure member 17 of the inner tube 12. A maximum spring stroke and maximum damping stroke are thus derived from the maximum amount of intended available relative travel of the two housings 11 and 12 in the compression stroke. In the fully compressed state of the unit, as evident from Fig. 2, the piston member 21 abuts and deforms the rubber body 43, which thus cushions the end stage of movement of the housings 11 and 12 in the compression stroke.

The movement of the piston 24 to reduce the volume of the inner damping chamber 26 simultaneously causes an increase in the volume of the spring chamber 27, in effect a volume interchange between the two chambers. Because of the cross-section relationship of the bores 16 and 23, this increase is necessarily less than the decrease in volume of the spring chamber 27 produced at the same time by the moving piston member 21. Compression of the air continues to take place, but with a controlled attenuation and consequently a reduction in the rising rate of the air spring by comparison with the rate that would result from constant reduction in the volume of the air chamber without a compensating, proportional increase in that volume.

In the event of a very high rate of compression of the unit 10, the air in the spring chamber 27 may compress so rapidly that the piston 24 cannot move, due to the pressure created by throttling of the outflow of hydraulic oil from the inner damping chamber 26, at the same rate as that of the relative movement of the two housings 11 and 12. If the two movements become out-of-phase in this manner, the piston 24 will move relative to the outer housing 11 in direction towards the closure member 13 of that housing. Should the piston travel towards the closure member 13 be sufficient to overcome the spacing 's', the piston will then come into contact with the head of the drive rod 41 and thereafter be mechanically positively driven by the rod. The mechanical drive will persist for such time as the rate of compression of the unit, i.e. rate of relative movement of the housings 11 and 12 towards one another, exceeds a predetermined threshold rate. The threshold rate is determined primarily by the rate of fluid outflow permitted by the respective valve 39 and the dimension of the spacing 's'. The fluid drive provided by the compressed air continues to be applied throughout and will take over from the mechanical drive if the rate of compression reduces below the threshold rate and a clearance is reinstated between the head of the rod 41 and the adjacent face of the piston 24. The drillings 42 in the rod 41 inclusive of the head thereof ensure that the cross-sectional obstruction of part of the air chamber 27 by the rod 41 and elastomer cylinder 44 does not diminish the force of compressed air acting on the piston 24.

In the case of the rebound stroke, on relief of the loading of the coupled components that induced the compression stroke, the force generated by the compressed air in the spring chamber 27 urges the two housings 11 and 12 apart, whereby the piston member 21 enlarges the volume of the spring chamber 27 and simultaneously reduces the volume of the outer damping chamber 33, thus causes an interchange of volume of the two chambers. The reducing volume of the damping chamber 33 places the hydraulic oil in that chamber under a positive pressure and displaces oil from the chamber 33 to the inner damping chamber 26 through the duct system provided by the opening 37, space 36 and associated one of the channels 38. In that case the valve 39 permitting flow through that channel exerts a relatively strong throttling effect on the flow to produce an appreciable retardation or damping of the relative movement of housings 11 and 12 apart. The positive pressure acting on the oil in the outer damping chamber 33 resists any tendency of the oil to cavitate in that chamber. Similarly, the compressed air continuing to act on the piston 24 in the sense of urging it towards the closure member 17 ensures that the volume enlargement of the inner damping chamber 26 is produced solely by inflowing oil, so that cavitation cannot occur in that chamber. The piston 24 moving in the bore 23 of the inner housing 12 again remains in the same position relative to the outer housing 11.

If the housings 11 and 12 in the rebound stroke attain the maximum extended position, the inwardly protruding lip of the piston member 21 contacts the elastomer cylinder 44, in particular the adjacent one of the end washers at the cylinder, towards the end of the relative movement of the housings and compresses the cylinder to cushion the final movement. Compression of the cylinder is accommodated by departure from abutment with the stop collar 45 and partial displacement along the rod 41. The end setting is shown in Fig. 3. The location of this rebound cushioning element within the stroke length of the unit 10 contributes to the compact form of the unit.

All three seals 25, 29 and 32 in the unit are subject to lubrication by the hydraulic oil during use, the seal 25 primarily during the compression stroke and the seals 29 and 32 primarily during the rebound stroke. The lubrication increases sealing integrity and extends service life.

The valves 39 can be constructed to be individually adjustable and are readily accessible for adjustment purposes. In principle, a single valve and single channel can suffice to control flow between the damping chambers and different forms of duct system are possible. In the case of the described twin-tube construction of the inner housing, utilisation of a space between the tubes for fluid transfer is convenient and has the advantage of avoiding the need for long drillings in solid material, but a bore in a single solid circumferential wall, or another arrangement, is equally possible. Apart from constructional aspects, there is also scope for variation of chamber shapes, utilisation of additional pistons or different forms of pistons, and provision of assist or restorative springs or spring bodies. The spring chamber can employ a gas other than air and the damping fluid itself can be a gas, rather than a liquid, or even a gas and liquid mixture (emulsion).

## Claims

1. A spring and damper unit (10) comprising two telescopically movable housings (11, 12) containing a spring chamber (27) for a gaseous medium which is compressible on movement of the housings (11, 12) together in a compression stroke thereof and a damping chamber (26) for a damping fluid which is displaceable therefrom during the compression stroke, **characterised in that** the housings additionally contain a piston (24) movable by such compressed gaseous medium to reduce the volume of the damping chamber (26) thereby to cause said displacement.

2. A unit as claimed in claim 1, wherein the piston (24) is arranged to produce an increase in the volume of the spring chamber (27) concurrently with the reduction in the volume of the damping chamber (26), the increase in the spring chamber volume being less than a reduction in that volume produced by the movement of the housings (11, 12) together.

3. A unit as claimed in claim 1 or claim 2, wherein the spring chamber (27) is formed by part of a cavity (16) in one (11) of the housings and part of a cavity (23) in the other housing (12) and the damping chamber (26) is formed by another part of the latter cavity (23).

4. A unit as claimed in claim 3, wherein the piston (24) is disposed in the cavity (23) in the other housing (12).

5. A unit as claimed in claim 4, comprising sealing means (25) providing a seal between the piston (24) and a circumferential wall (19) of the cavity (23) in which it is disposed.

6. A unit as claimed in any one of the preceding claims, wherein the piston (24) is arranged to separate the spring chamber (27) from the damping chamber (26).

7. A unit as claimed in any one of the preceding claims, wherein the piston (24) is a floating piston.

8. A unit as claimed in any one of the preceding claims, comprising drive means (41) effective on movement of the housings (11, 12) together at a rate exceeding a predetermined rate to mechanically positively drive the piston (24).

9. A unit as claimed in any one of the preceding claims, comprising cushioning means (43, 44) for cushioning at least one of an end stage of movement of the housings (11, 12) together in the compression stroke thereof and an end stage of movement of the housings (11, 12) apart in a rebound stroke thereof.

10. A unit as claimed in claim 1, wherein the housings (11, 12) bound an interior space formed by a cavity (16) in one of the housings (11) and a cavity (23) in the other housing (12), and the piston is a floating piston (24) disposed in one of the cavities (23) and dividing the interior space into the spring chamber (27) and the damping chamber (26), the spring chamber and the damping chamber containing, respectively, a gaseous medium and a damping fluid, and the housings (11, 12) being movable together in a compression stroke thereof to compress the gaseous medium through reduction in the volume of the spring chamber (27) and to cause, by compression of the gaseous medium, movement of the piston (24) to produce a reduction in the volume of the damping chamber (26) for displacement of damping fluid therefrom.

11. A unit as claimed in claim 10, wherein the housing (11) with the other cavity (16) is provided with a drive member (41) which is disposed at a spacing from the piston (24) in an unloaded state of the unit (10) and arranged to drivingly engage the piston (24) on movement of the housings (11, 12) together at a rate exceeding a predetermined rate.

12. A unit as claimed in claim 11, wherein the drive member (41) comprises a rod (41) extending along a common axis of the cavities (16, 23) and the piston (24).

13. A unit as claimed in claim 12, wherein the rod (41) is provided with a duct (42) for conducting the gaseous medium to and from the region of the piston (24).

14. A spring and damper unit comprising two telescopically movable housings (11, 12) containing a spring chamber (27) for a gaseous medium which is compressible on movement of the housings (11, 12) together in a compression stroke thereof, a first damping chamber (26) for a damping fluid which is displaceable therefrom by a piston (24) during the compression stroke and a second damping chamber (33) for receiving the displaced fluid and returning the fluid to the first damping chamber (26) on movement of the housings (11, 12) apart in a rebound stroke thereof, **characterised in that** the piston (24) is arranged to separate the spring chamber (27) from the first damping chamber (26) and is movable to reduce the volume of the first damping chamber (26) for said displacement of fluid therefrom and the second damping chamber (33) is so arranged between the housings (11, 12) that movement of the housings apart causes a reduction in the volume of the second damping chamber (33) for expulsion of fluid to be returned to the first damping chamber (26).

15. A unit as claimed in claim 14, wherein the first and second damping chambers (26, 33) have substantially the same area in cross-section transversely to the directions of movement of the housings (11, 12) in the compression and rebound strokes.

16. A unit as claimed in claim 14 or claim 15, wherein the second damping chamber (33) is formed by part of a cavity (16) in one of the housings (11) and the spring chamber (27) is formed at least partially by another part of the same cavity (16).

17. A unit as claimed in any one of claims 14 to 16, wherein the second damping chamber (33) is annular.

18. A unit as claimed in claim 17, wherein the second damping chamber (33) is radially bounded by two substantially concentric circumferential wall portions (15, 20) respectively of the two housings (11, 12).

19. A unit as claimed in claim 18, wherein the second damping chamber (33) is axially bounded by two oppositely directed projections (28, 29, 30; 31, 32) each provided at a respective one of the wall portions (15, 20).

20. A unit as claimed in claim 19, wherein the projection (28, 29, 30; 31, 32) provided at each wall portion (15, 20) comprises sealing means (29; 32) providing a seal relative to the respective other wall portion and wherein the damping fluid is a liquid and the sealing means (29; 32) are subject to lubrication by the liquid in the second damping chamber (33) during movement of the housings (11, 12) apart.

21. A unit as claimed in claim 14, wherein the housings (11; 12) each have a cavity (16; 23) enclosed by a respective one of two substantially coaxial and radially spaced circumferential walls (15; 19, 20) and the piston (24) is disposed in the cavity (23) enclosed by an inner one of the walls (19), the walls (15; 20) each being provided with a respective one of two oppositely directed projections (28, 29, 30; 31, 32) which together with substantially concentric portions of the walls (15; 20) bound the second damping chamber (33) and which are movable towards one another on movement of the housings (11; 12) apart in the rebound stroke thereof to cause said reduction in the volume of the second damping chamber (33).

22. A unit as claimed in claim 21, wherein the projection (28, 29, 30; 31, 32) provided at each of the walls (15; 20) comprises a seal (29; 32) sealingly contacting the respective other wall.

23. A unit as claimed in claim 22, wherein each of the seals (29; 32) is axially located in a groove.

24. A unit as claimed in any one of claims 21 to 23, wherein the inner one of the walls (19, 20) is provided with duct means (36) for conveying hydraulic fluid between the damping chambers (26, 33).

25. A unit as claimed in claim 24, wherein the inner one (19, 20) of the circumferential walls comprises two substantially concentric and radially spaced tubes (19; 20), the duct means (36) being formed in part by the space between the tubes.

26. A unit as claimed in claim 25, wherein the tubes (19; 20) are connected at one pair of associated ends thereof with a closure member (17) and at the other pair of associated ends thereof with an annular piston member (21) defining the respective one (31) of the projections at its outer circumference, the annular piston member (21) being effective to simultaneously and reciprocally vary the volumes of the spring chamber (27) and the second damping chamber (33) during movement of the housings (11, 12) together and apart.

27. A unit as claimed in claim 26, wherein the outer one (20) of the tubes is threadedly connected with and the inner one (19) of the tubes is clamped between the closure member (17) and the annular piston member (21).

28. A unit as claimed in any one of claims 25 to 27, wherein the outer one (15) of the walls comprises a further tube (15) which is partly concentric with and radially outwardly spaced from the outer tube (20) of the inner one of the walls (19, 20) and which is provided at one end with the respective one of the projections (28).

29. A unit as claimed in any one of the preceding claims, wherein the gaseous medium is air.

## Patentansprüche

1. Feder-Dämpfer-Einheit (10) mit zwei teleskopartig bewegbaren Gehäusen (11, 12), die eine Federkammer (27) für ein gasförmiges Medium, das bei Bewegung der Gehäuse (11, 12) aufeinander zu in einem Kompressionshub davon komprimierbar ist, und eine Dämpfungskammer (26) für ein Dämpfungsfluid, das während des Kompressionshubs daraus verdrängbar ist, enthalten, **dadurch gekennzeichnet, dass** die Gehäuse darüber hinaus einen Kolben (24) enthalten, der durch ein solches komprimiertes gasförmiges Medium bewegbar ist, um das Volumen der Dämpfungskammer (26) zu verringern und dadurch die Verdrängung zu bewirken.

2. Einheit nach Anspruch 1, bei der der Kolben (24) zur Erzeugung einer Zunahme des Volumens der Federkammer (27) gleichzeitig mit der Verringerung des Volumens der Dämpfungskammer angeordnet ist, wobei die Zunahme des Federkammervolumens geringer ist als eine Verringerung des Volumens, das durch die Bewegung der Gehäuse (11, 12) aufeinander zu erzeugt wird.

3. Einheit nach Anspruch 1 oder 2, bei der die Federkammer (27) durch einen Teil eines Hohlraums (16) in einem (11) der Gehäuse und einem Teil eines Hohlraumes (23) im anderen Gehäuse (12) gebildet und die Dämpfungskammer (26) durch einen anderen Teil des letzteren Hohlraums (23) gebildet wird.

4. Einheit nach Anspruch 3, bei der der Kolben (24) im Hohlraum (23) in dem anderen Gehäuse (12) angeordnet ist.

5. Einheit nach Anspruch 4, die ein Dichtungsmittel (25) enthält, das eine Dichtung zwischen dem Kolben (24) und einer Umfangswand (19) des Hohlraums (23) bereitstellt, in dem es angeordnet ist.

6. Einheit nach einem der vorhergehenden Ansprüche, bei der der Kolben (24) so angeordnet ist, dass er die Federkammer (27) von der Dämpfungskammer (26) trennt.

7. Einheit nach einem der vorhergehenden Ansprüche, bei der der Kolben (24) ein schwimmender Kolben ist.

8. Einheit nach einem der vorhergehenden Ansprüche, die ein Antriebsmittel (41) enthält, das bei Bewegung der Gehäuse (11, 12) aufeinander zu mit einer Geschwindigkeit, die eine vorbestimmte Geschwindigkeit übertrifft, dahingehend wirkt, den Kolben (24) zwangsweise mechanisch anzutreiben.

9. Einheit nach einem der vorhergehenden Ansprüche, die Dämpfungsmittel (43, 44) zur Dämpfung einer Endstufe der Bewegung der Gehäuse (11, 12) aufeinander zu bei deren Kompressionshub und/oder einer Endstufe der Bewegung der Gehäuse (11, 12) voneinander weg bei einem Ausfederungshub davon umfasst.

10. Einheit nach Anspruch 1, bei der die Gehäuse (11, 12) einen durch einen Hohlraum (16) in einem der Gehäuse (11) gebildeten Innenraum und einen im anderen Gehäuse (12) gebildeten Hohlraum (23) begrenzen und es sich bei dem Kolben um einen schwimmenden Kolben (24) handelt, der in einem der Hohlräume (23) angeordnet ist und den Innenraum in die Federkammer (27) und die Dämpfungskammer (26) teilt, wobei die Federkammer und die Dämpfungskammer ein gasförmiges Medium bzw. ein Dämpfungsfluid enthalten und die Gehäuse (11, 12) in einem Kompressionshub davon aufeinander zu bewegbar sind, um das gasförmige Medium durch Verringerung des Volumens der Federkammer (27) zu komprimieren und durch Komprimierung des gasförmigen Mediums eine Bewegung des Kolbens (24) zu bewirken, um eine Verringerung des Volumens der Dämpfungskammer (26) zwecks Verdrängung des Dämpfungsfluids daraus zu erzeugen.

11. Einheit nach Anspruch 10, bei der das Gehäuse (11) mit dem anderen Hohlraum (16) mit einem Antriebsglied (41) versehen ist, das im unbelasteten Zustand der Einheit (10) in einem Abstand vom Kolben (24) angeordnet ist und weiterhin so angeordnet ist, dass es bei Bewegung der Gehäuse (11, 12) aufeinander zu mit einer eine vorbestimmte Geschwindigkeit übertreffenden Geschwindigkeit, den Kolben (24) in Wirkeingriff nimmt.

12. Einheit nach Anspruch 11, bei der das Antriebsglied (41) eine sich entlang einer gemeinsamen Achse der Hohlräume (16, 23) und des Kolbens (24) erstreckende Stange (41) umfasst.

13. Einheit nach Anspruch 12, bei der die Stange (41) mit einem Kanal (42) zur Leitung des gasförmigen Mediums zu dem Bereich des Kolbens (24) und davon weg versehen ist.

14. Feder-Dämpfer-Einheit mit zwei teleskopartig bewegbaren Gehäusen (11, 12), die eine Federkammer (27) für ein gasförmiges Medium, das bei Bewegung der Gehäuse (11, 12) aufeinander zu in einem Kompressionshub davon komprimierbar ist, eine Dämpfungskammer (26) für ein Dämpfungsfluid, das während des Kompressionshubs durch einen Kolben (24) daraus verdrängbar ist, und eine zweite Dämpfungskammer (33) zur Aufnahme des verdrängten Fluids und zur Rückführung des Fluids zur ersten Dämpfungskammer (26) bei Bewegung der Gehäuse (11, 12) voneinander weg in einem Ausfederungshub davon enthalten, **dadurch gekennzeichnet, dass** der Kolben (24) so angeordnet ist, dass er die Federkammer (27) von der ersten Dämpfungskammer (26) trennt, und zur Verringerung des Volumens der ersten Dämpfungskammer (26) zur Verdrängung des Fluids daraus bewegbar ist und die zweite Dämpfungskammer (33) so zwischen den Gehäusen (11, 12) angeordnet ist, dass eine Bewegung der Gehäuse voneinander weg eine Verringerung des Volumens der zweiten Dämpfungskammer (33) zum Austreiben des zur ersten Dämpfungskammer (26) zurückzuführenden Fluids bewirkt.

15. Einheit nach Anspruch 14, bei der die erste und die zweite Dämpfungskammer (26, 33) im Wesentlichen die gleiche Querschnittsfläche quer zu den Bewegungsrichtungen der Gehäuse (11, 12) beim Kompressions- und Ausfederungshub aufweisen.

16. Einheit nach Anspruch 14 und 15, bei der die zweite Dämpfungskammer (33) durch einen Teil eines Hohlraums (16) in einem der Gehäuse (11) und die Federkammer (27) zumindest teilweise durch einen anderen Teil des gleichen Hohlraums (16) gebildet wird.

17. Einheit nach einem der Ansprüche 14 bis 16, bei der die zweite Dämpfungskammer (33) ringförmig ist.

18. Einheit nach Anspruch 17, bei der die zweite Dämpfungskammer (33) radial durch zwei im Wesentlichen konzentrische Umfangswandteile (15, 20) der beiden Gehäuse (11 bzw. 12) begrenzt wird.

19. Einheit nach Anspruch 18, bei der die zweite Dämpfungskammer (33) axial durch zwei entgegengesetzt gerichtete Vorsprünge (28, 29, 30; 31, 32) begrenzt wird, die jeweils an einem jeweiligen der Wandteile (15, 20) vorgesehen sind.

20. Einheit nach Anspruch 19, bei der der an jedem Wandteil (15, 20) vorgesehene Vorsprung Dichtungsmittel (29; 32) umfasst, die eine Dichtung bezüglich des jeweiligen anderen Wandteils bereitstellen, und bei der das Dämpfungsfluid eine Flüssigkeit ist und die Dichtungsmittel (29; 32) bei Bewegung der Gehäuse (11, 12) voneinander weg einer Schmierung durch die Flüssigkeit in der zweiten Dämpfungskammer (33) unterliegen.

21. Einheit nach Anspruch 14, bei der die Gehäuse (11; 12) jeweils einen Hohlraum (16; 23) aufweisen, der durch eine jeweilige zweier im Wesentlichen koaxialer und radial beabstandeter Umfangswände (15; 19, 20) umschlossen ist, und der Kolben (24) in dem durch eine innere der Wände (19) umschlossenen Hohlraum (23) angeordnet ist, wobei die Wände (15; 20) jeweils mit einem jeweiligen der beiden entgegengesetzt gerichteten Vorsprünge (28, 29, 30; 31, 32) versehen sind, die zusammen mit im Wesentlichen konzentrischen Teilen der Wände (15; 20) die zweite Dämpfungskammer (33) begrenzen und bei Bewegung der Gehäuse (11; 12) voneinander weg während ihres Ausfederungshubs aufeinander zu bewegbar sind, um die Verringerung des Volumens der zweiten Dämpfungskammer (33) zu bewirken.

22. Einheit nach Anspruch 21, bei der der an jeder der Wände (15; 20) vorgesehene Vorsprung (28, 29, 30; 31, 32) eine Dichtung (29; 32) umfasst, die die jeweilige andere Wand abdichtend berührt.

23. Einheit nach Anspruch 22, bei der jede der Dichtungen (29; 32) axial in einer Nut angeordnet ist.

24. Einheit nach einem der Ansprüche 21 bis 23, bei der die innere der Wände (19, 20) mit einem Kanalmittel (36) zur Beförderung von Hydraulikfluid zwischen den Dämpfungskammern (26, 33) versehen ist.

25. Einheit nach Anspruch 24, bei der die innere (19, 20) der Umfangswände zwei im Wesentlichen konzentrische und radial beabstandete Rohre (19, 20) umfasst, wobei das Kanalmittel (36) teilweise durch den Raum zwischen den Rohren gebildet wird.

26. Einheit nach Anspruch 25, bei der die Rohre (19; 20) an einem Paar zugehöriger Enden davon mit einem Verschlussglied (17) und am anderen Paar zugehöriger Enden davon mit einem ringförmigen Kolbenglied (21), das den jeweiligen (31) der Vorsprünge an seinem Außenumfang begrenzt, verbunden sind, wobei das ringförmige Kolbenglied (21) dahingehend wirkt, das Volumen der Federkammer (27) und der zweiten Dämpfungskammer (33) bei Bewegung der Gehäuse (11, 12) aufeinander zu und voneinander weg gleichzeitig und wechselseitig zu ändern.

27. Einheit nach Anspruch 26, bei der das äußere (20) der Rohre mit dem Verschlussglied (17) und dem ringförmigen Kolbenglied (21) verschraubt und das innere (19) der Rohre zwischen diesen festgeklemmt ist.

28. Einheit nach einem der Ansprüche 25 bis 27, bei der die äußere (15) der Wände ein weiteres Rohr (15) umfasst, das teilweise mit dem äußeren Rohr (20) der inneren der Wände (19, 20) konzentrisch und davon radial nach außen beabstandet ist und das an einem Ende mit dem jeweiligen der Vorsprünge (28) versehen ist.

29. Einheit nach einem der vorhergehenden Ansprüche, bei der das gasförmige Medium Luft ist.

## Revendications

1. Ensemble de ressort et d'amortisseur (10) comprenant deux logements pouvant se déplacer télescopiquement (11, 12) contenant une chambre de ressort (27) pour un milieu gazeux qui est compressible lors du mouvement des logements (11, 12) l'un vers l'autre dans une course de compression de ceux-ci et une chambre d'amortisseur (26) pour un fluide amortisseur pouvant être déplacé de celle-ci durant la course de compression, **caractérisé en ce que** les logements comprennent en outre un piston (24) pouvant être déplacé par un tel milieu gazeux comprimé pour réduire le volume de la chambre d'amortisseur (26) pour causer de la sorte ledit déplacement.

2. Ensemble selon la revendication 1, dans lequel le piston (24) est agencé pour produire une augmentation dans le volume de la chambre de ressort (27) simultanément à la réduction du volume de la chambre d'amortisseur (26), l'augmentation du volume dans la chambre de ressort étant inférieure à une réduction du volume produite par le mouvement des logements (11, 12) l'un vers l'autre.

3. Ensemble selon la revendication 1 ou la revendication 2, dans lequel la chambre de ressort (27) est constituée par une partie d'une cavité (16) aménagée dans un (11) des logements et par une partie d'une cavité (23) aménagée dans l'autre logement (12) et la chambre d'amortisseur (26) est constituée par une autre partie de cette dernière cavité (23).

4. Ensemble selon la revendication 3, dans lequel le piston (24) est disposé dans la cavité (23) dans l'autre logement (12).

5. Ensemble selon la revendication 4, comprenant un moyen d'étanchéité (25) procurant une étanchéité entre le piston (24) et une paroi circonférentielle (19) de la cavité (23) dans laquelle il est disposé.

6. Ensemble selon l'une quelconque des revendications précédentes, dans lequel le piston (24) est agencé de manière à séparer la chambre de ressort (27) de la chambre d'amortisseur (26).

7. Ensemble selon l'une quelconque des revendications précédentes, dans lequel le piston (24) est un piston flottant.

8. Ensemble selon l'une quelconque des revendications précédentes, comprenant un moyen d'entraînement (41) agissant lors du mouvement des logements (11, 12) l'un vers l'autre à un taux excédent un taux prédéterminé pour entraîner positivement de façon mécanique le piston (24).

9. Ensemble selon l'une quelconque des revendications précédentes, comprenant un moyen d'amortissement (43, 44) pour amortir au moins un des mouvements au stade de fin de course des logements (11, 12) l'un vers l'autre dans la course de compression de ceux-ci et un mouvement au stade de fin de course des logements (11, 12) l'un à l'écart de l'autre dans une course de rebond de ceux-ci.

10. Ensemble selon la revendication 1, dans lequel les logements (11, 12) délimitent un espace intérieur constitué par une cavité (16) aménagée dans l'un des logements (11) et une cavité (23) aménagée dans l'autre logement (12), et le piston est un piston flottant (24) disposé dans une des cavités (23) et divisant l'espace intérieur en une chambre de ressort (27) et une chambre d'amortisseur (26), la chambre de ressort et la chambre d'amortisseur contenant, respectivement, un milieu gazeux et un fluide amortisseur, et les logements (11, 12) pouvant se déplacer l'un vers l'autre dans une course de compression de ceux-ci pour comprimer le milieu gazeux par une réduction du volume de la chambre de ressort (27) et pour causer, par la compression du milieu gazeux, le mouvement du piston (24) pour produire une réduction dans le volume de la chambre d'amortisseur (26) pour causer le déplacement du fluide amortisseur de celle-ci.

11. Ensemble selon la revendication 10, dans lequel le logement (11) avec l'autre cavité (16) est pourvu d'un élément d'entraînement (41) qui est disposé à une distance du piston (24) dans un état déchargé de l'ensemble (10) et qui est agencé pour s'engager de façon menante sur le piston (24) lors du mouvement des logements (11, 12) l'un vers l'autre à un taux dépassant un taux prédéterminé.

12. Ensemble selon la revendication 11, dans lequel l'élément d'entraînement (41) comprend une tige (41) s'étendant le long d'un axe commun aux cavités (16, 23) et au piston (24).

13. Ensemble selon la revendication 12, dans lequel la tige (41) est pourvue d'un conduit (42) pour conduire le milieu gazeux vers et depuis la région du piston (24).

14. Ensemble de ressort et d'amortisseur comprenant deux logements pouvant se déplacer télescopiquement (11, 12) contenant une chambre de ressort (27) pour un milieu gazeux qui est compressible lors du mouvement des logements (11, 12) l'un vers l'autre dans une course de compression de ceux-ci, une première chambre d'amortisseur (26) pour un fluide amortisseur pouvant être déplacé de celle-ci par un piston (24) durant la course de compression et une deuxième chambre d'amortisseur (33) pour recevoir le fluide déplacé et renvoyer le fluide à la première chambre d'amortisseur (26) lors du mouvement des logements (11, 12) à l'écart l'un de l'autre dans une course de rebond de ceux-ci, **caractérisé en ce que** le piston (24) est agencé pour séparer la chambre de ressort (27) de la première chambre d'amortisseur (26) et qu'il peut se déplacer pour réduire le volume de la première chambre d'amortisseur (26) pour ledit déplacement de fluide de celle-ci et la deuxième chambre d'amortisseur (33) est agencée de telle façon entre les logements (11, 12) que le mouvement des logements à l'écart l'un de l'autre cause une réduction du volume de la deuxième chambre d'amortisseur (33) pour que le fluide expulsé soit renvoyé à la première chambre d'amortisseur (26).

15. Ensemble selon la revendication 14, dans lequel la première et la deuxième chambres d'amortisseur (26, 33) ont sensiblement la même superficie de coupe transversale par rapport aux directions de mouvement des logements (11, 12) dans les courses de compression et de rebond.

16. Ensemble selon la revendication 14 ou la revendication 15, dans lequel la deuxième chambre d'amortisseur (33) est constituée par une partie d'une cavité (16) aménagée dans un des logements (11) et la chambre de ressort (27) est constituée, du moins en partie, par une autre partie de la même cavité (16).

17. Ensemble selon l'une quelconque des revendications 14 à 16, dans lequel la deuxième chambre d'amortisseur (33) est annulaire.

18. Ensemble selon la revendication 17, dans lequel la deuxième chambre d'amortisseur (33) est liée dans le sens radial par deux parties de parois circonférentielles sensiblement concentriques (15, 20) des deux logements (11, 12), respectivement.

19. Ensemble selon la revendication 18, dans lequel la deuxième chambre d'amortisseur (33) est limitée dans le sens axial par deux saillies dirigées à l'opposé l'une de l'autre (28, 29, 30 ; 31, 32) prévues chacune sur une partie respective des parties de paroi (15, 20).

20. Ensemble selon la revendication 19, dans lequel la saillie (28, 29, 30 ; 31, 32) prévue sur chacune des parties de parois (15, 20) comprend des moyens d'étanchéité (29 ; 32) fournissant une étanchéité par rapport à l'autre partie de paroi respective et dans lequel le fluide amortisseur est un liquide et le moyen d'étanchéité (29 ; 32) fait l'objet d'une lubrification par le liquide contenu dans la deuxième chambre d'amortisseur (33) pendant le mouvement des logements (11, 12) à l'écart l'un de l'autre.

21. Ensemble selon la revendication 14, dans lequel les logements (11 ; 12) comportent chacun une cavité (16 ; 23) enclose par une respective des deux parois circonférentielles espacées dans le sens radial et sensiblement coaxiales (15 ; 19, 20) et dans lequel le piston (24) est disposé dans la cavité (23) enclose par une des parois qui est intérieure (19), les parois (15 ; 20) étant chacune pourvue d'une respective de deux saillies dirigées à l'opposée l'un de l'autre (28, 29, 30 ; 31, 32) qui, avec les parties sensiblement concentriques des parois (15 ; 20) délimitent la deuxième chambre d'amortisseur (33) et qui sont mobiles l'une vers l'autre lors du mouvement des logements (11 ; 12) à l'écart l'un de l'autre lors de la course de rebond de ceux-ci pour causer ladite réduction dans le volume de la deuxième chambre d'amortisseur (33).

22. Ensemble selon la revendication 21, dans lequel la saillie (28, 29, 30 ; 31, 32) prévue sur chacune des parois (15 ; 20) comprend un joint d'étanchéité (29 ; 32) établissant par contact l'étanchéité avec l'autre paroi respective.

23. Ensemble selon la revendication 22, dans lequel chacun des joints d'étanchéité (29 ; 32) est positionné dans le sens axial dans une gorge.

24. Ensemble selon l'une quelconque des revendications 21 à 23, dans lequel la paroi intérieure des parois (19, 20) est pourvue d'un moyen de conduit (36) pour acheminer le fluide hydraulique entre les chambres d'amortisseur (26, 33).

25. Ensemble selon la revendication 24, dans lequel la paroi intérieure (19, 20) des parois circonférentielles comprend deux tubes espacés dans le sens radial et sensiblement concentriques (19 ; 20), le moyen de conduit (36) étant constitué en partie par l'espace présent entre les tubes.

26. Ensemble selon la revendication 25, dans lequel les tubes (19 ; 20) sont connectés à une paire associée d'extrémités de ceux-ci avec un élément de fermeture (17) et à l'autre paire d'extrémités associée de ceux-ci avec un élément de piston annulaire (21) définissant la saillie respective (31) des saillies prévues à sa circonférence extérieure, l'élément de piston annulaire (21) agissant pour faire varier simultanément et de façon réciproque les volumes de la chambre de ressort (27) et de la deuxième chambre d'amortisseur (33) durant le mouvement des logements (11, 12) l'un vers l'autre et à l'écart l'un de l'autre.

27. Ensemble selon la revendication 26, dans lequel le tube extérieur (20) des tubes est connecté par un filetage et le tube intérieur (19) des tubes est serré entre l'élément de fermeture (17) et l'élément de piston annulaire (21).

28. Ensemble selon l'une quelconque des revendications 25 à 27, dans lequel la paroi extérieure (15) des parois comprend un autre tube (15) qui est en partie concentrique avec et espacé extérieurement dans le sens radial par rapport au tube extérieur (20) de la paroi intérieure des parois (19, 20) et qui est pourvue à une extrémité de l'une des saillies respectives (28).

29. Ensemble selon l'une quelconque des revendications précédentes, dans lequel le milieu gazeux est de l'air.
